**Europäisches Patentamt**

**European Patent Office**

**Office européen des brevets**

(11) Veröffentlichungsnummer: **0 064 735**
**A2**

---

(12) # EUROPÄISCHE PATENTANMELDUNG

(21) Anmeldenummer: **82103971.6**

(22) Anmeldetag: **07.05.82**

(51) Int. Cl.³: **B 23 B 51/00**
**B 23 B 31/12**

(30) Priorität: **12.05.81 DE 3118691**

(43) Veröffentlichungstag der Anmeldung:
**17.11.82 Patentblatt 82/46**

(84) Benannte Vertragsstaaten:
**CH DE FR GB IT LI**

(71) Anmelder: **GEBRÜDER HELLER GMBH**
**WERKZEUGFABRIK**
**Uphuser Heerstrasse 102**
**D-2807 Achim-Uphusen(DE)**

(72) Erfinder: **Kleine, Werner, Dipl.-Ing., Dipl.-Wirtsch.-Ing.**
**An der Marsch 29**
**D-2807 Achim(DE)**

(74) Vertreter: **Patentanwälte Dr. Wolff, H. Bartels**
**Dipl.-Chem. Dr. Brandes Dr.-Ing. Held, Dipl.-Phys. Wolff**
**Lange Strasse 51**
**D-7000 Stuttgart 1(DE)**

(54) **Mehrbackenfutter und Werkzeug sowie Bohrersatz für das Mehrbackenfutter und Verfahren zum spanlosen Formen mindestens eines Teiles des Werkzeuges.**

(57) Das *Mehrbackenfutter* hat einen Backenhalter (3) für Bakken (11) zum eine Axialbewegung zulassenden losen Einspannen von Werkzeugschäften (116). Durch eine Mitnehmerfläche (33) an mindestens einer Backe (11) wird die Drehung des Futters auf das Werkzeug übertragen. Das Backenhalterende (2) ist mit einer hohlen Antriebswelle (19) verbindbar, in der ein Schläger (15) axial geführt ist. Ein Durchbruch (14) im Backenhalterende (2) ermöglicht das Aufschlagen des Schlägers (15) auf das Werkzeugschaftende.

Das *Werkzeug* weist an seinem Einspannschaft (116) zum Übertragen des Drehmomentes eines Mehrbackenfutters eine Rippe (135) auf, die in Bezug auf alle Diametralebenen des Einspannschaftes (116) unsymmetrisch angeordnet ist.

Bei allen Bohrern des *Bohrersatzes* bilden die Einspannschäfte (116) mit den Werkzeugschäften eine durchgehende, zylindrische Außenfläche und sind mit einer Mitnehmerfläche (134) versehen.

Beim *Verfahren* zum spanlosen Formen mindestens eines in Bezug auf alle Diametralebenen unsymmetrischen Werkzeugteiles wird mindestens ein Paar spiegelbildlich zueinander angeordneter Teile in einem Gesenk aus einem zusammenhängenden Rohling geformt und die geformten Teile werden dann anschließend voneinander getrennt.

./...

Croydon Printing Company Ltd.

*Fig.3.*

*Fig.4.*

0064735

4.Mai 1981,
7508rlh
Reg.-Nr. 126 320

Firma GEBRÜDER HELLER GMBH. WERKZEUGFABRIK,
Uphuser Heerstr. 102, 2807 Achim - Uphusen

---

Mehrbackenfutter und Werkzeug sowie Bohrersatz für das
Mehrbackenfutter und Verfahren zum spanlosen Formen mindestens
eines Teiles des Werkzeuges.

---

Die Erfindung betrifft ein Mehrbackenfutter zum Verbinden
von verschieden dicken Einspannschäften von Werkzeugen mit
einer Antriebswelle einer Maschine, das einen Backenhalter
aufweist, der mit seinem hinteren Ende mit der Antriebswelle fest verbindbar ist und mindestens zwei Backen umfaßt,
die mit Einspannflächen versehen sind und zum Einspannen
des Einspannschaftes des Werkzeuges im Backenhalter in einer Einspannrichtung bewegbar gelagert sind.

Mehrbackenfutter dieser Art sind für Bohrer, Meißel, Schraubendrehereinsätze und dergleichen Werkzeuge bekannt.

Die Erfindung befaßt sich mit der Herstellung von Werkzeughaltern für Werkzeuge, auf die während der Bearbeitung axiale Schläge ausgeübt werden müssen, wie das beispielsweise bei Bohrern in Schlagbohrmaschinen und in Bohrhämmern der Fall ist.

Unter Schlagbohrmaschinen versteht man Bohrmaschinen, die als Werkzeughalter zum Einspannen verschieden dicker Einspannschäfte ein Mehrbackenfutter, insbesondere ein Zahnkranzfutter, aufweisen, das an der als Spindel ausgebildeten Antriebswelle befestigt ist, die durch eine Ratschenscheibe axial in stoßweise Bewegungen versetzt wird. Hierbei werden die von der Ratschenscheibe auf die Antriebswelle ausgeübten Stöße von dieser über das Mehrbackenfutter auf den im Futter fest und axial unverschiebbar eingespannten Bohrer übertragen.

Unter einem Bohrhammer versteht man eine Bohrmaschine, in der ein Schläger von einem pneumatisch oder mechanisch angetriebenen Flugkolben in einem Rohr axial hin und her bewegt wird. Der Schläger, der auch als Teil des Flugkolbens ausgebildet sein kann, schlägt dabei auf das hintere Ende des Einspannschaftes des Werkzeuges, das axial verschiebbar im Werkzeughalter gehalten ist. Die einzelnen Schläge sind hierbei um ein Vielfaches größer als bei einer Schlagbohrmaschine. Je nach konstruktiver Ausbildung wird der Werkzeughalter insgesamt oder teilweise in Drehung versetzt und überträgt diese auf das Bohrwerkzeug. Er bildet mit dem Bohrhammer eine bauliche Einheit. Bei einem Bohrhammer müssen daher die verschiedenen Werkzeuge, um in den Werkzeughalter zu passen, alle mit dem gleichen Einspannschaft versehen sein. Dadurch werden die Herstellungskosten für die Werkzeuge wesentlich erhöht. Die Anformung des in den Werkzeughalter passenden Einspannschaftes insbesondere bei Bohrern mit extrem kleinen Durchmessern kann oft teurer sein als die Herstellung des Bohrers selbst. Im wesentlichen aus diesem Grunde sind die Bohrwerkzeuge für Bohrhämmer mehr als doppelt so teurer als entsprechende Werkzeuge für Schlagbohrmaschinen. Da es außerdem bei den Bohrhämmern verschiedener Hersteller eine Vielzahl, nämlich über vierzig, verschiedener Werkzeugaufnahmen gibt, kommen hier noch zusätzliche Schwierigkeiten hinzu. Benötigt der Markt z.B. eine bestimmte Anzahl von Bohrern einer Dimension, dann muß bei der Herstellung der Bohrer diese Anzahl nach der Anzahl der Bohrhämmer mit verschiedenen Werkzeugaufnahmen unterteilt werden, so daß der Hersteller zum Herstellen von Bohrern für die gleichen Bohrungsdimensionen eine Vielzahl von verschiedenen Bohrern von jeweils geringerer Stückzahl herstellen muß, wodurch die Fertigungskosten der Bohrer weiterhin wesentlich erhöht werden. Außerdem macht die Lagerung der verschiedenen Bohrer, die zum Bohren von Bohrungen mit jeweils gleichen Dimensionen vorgesehen sind, zusätzliche Schwierigkeiten, die den Vertrieb dieser Werkzeuge erschweren, da kein Werkzeughändler in der Lage ist, alle verschiedenen Bohrhammerwerkzeuge vorrätig zu halten.

Die Fachleute sind sich dieser Problematik seit 20 Jahren bewußt und haben versucht, hier Abhilfe zu schaffen.

Ein Weg für diese Abhilfe besteht darin, für Bohrer mit gleichem Einspannschaft Adapter vorzusehen, die in die Werkzeugaufnahme des jeweils gewünschten Bohrhammers passen. Die Bohrwerkzeuge werden in diesen Adaptern über einen Konus oder ein Gewinde befestigt. Damit können zwar die Schwierigkeiten beseitigt werden, die durch die verschiedenen Werkzeugaufnahmen von Bohrhämmern verschiedener Hersteller entstehen. Es bleibt jedoch nach wie vor der entscheidende Nachteil, daß die Bohrwerkzeuge selbst alle mit dem gleichen, in einer Werkzeugaufnahme, in diesem Fall der des Adapters, passenden Einspannschaft versehen sein müssen.
Abgesehen davon ist diese Lösung unbefriedigend, weil durch den zwischengeschalteten Adapter eine deutliche Reduzierung der Bohrleistung eintritt, da die Schlagenergie an der Trennstelle zwischen Bohrer und Adapter nur unvollständig übertragen wird.

Bei einem zweiten Versuch, die oben genannten Schwierigkeiten zu beseitigen, wurde der Backenhalter eines Mehrbackenfutters zum Einspannen verschieden dicker Einspannschäfte mit einem Einsteckende versehen, das der Werkzeugaufnahme des jeweiligen Bohrhammers angepaßt war. Die Schlagenergie wird hierbei vom Schläger auf das Einsteckende des Mehrbackenfutters und vom Boden des Backenhalters des Mehrbackenfutters auf den in diesem fest eingespannten Bohrer übertragen. Dieser Versuch schlug jedoch fehl, weil Mehrbackenfutter nur für die Übertragung verhältnismäßig schwacher Stöße geeignet sind, wie sie bei Schlagbohrmaschinen auftreten. Bei der Übertragung von starken Stößen, wie sie bei Bohrhämmern erwünscht und verwirklicht sind, wurden die so verwendeten Mehrbackenfutter wegen ihres verhältnismäßig komplizierten Aufbaues durch die starken Stöße sehr schnell zerstört. Aus diesem Grunde wird dieser Lösungsweg von der Fachwelt nicht beschritten. Aber auch dann, wenn sich dieser Lösungsweg als begehbar erwiesen hätte, wäre der Nachteil der oben in Verbindung mit dem Adapter geschilderten Verringerung der Bohrleistung geblieben.

Der Erfindung liegt die Aufgabe zu Grunde, ein Mehrbackenfutter so auszubilden, daß es auch bei Bohrhämmern und ähnlichen Maschinen anwendbar ist, bei denen unmittelbar auf das hintere Ende des Werkzeuges Schläge von einem Schläger ausgeführt werden müssen. Hierbei ist unter der Bezeichnung "Schläger" jeder in irgend einer Weise axial hin und her bewegte Körper zu verstehen, der unmittelbar auf das hintere Ende eines in einem Werkzeughalter axial verschiebbaren Werkzeuges einwirkt.

- 5 -

0064735

Diese Aufgabe ist gemäß der Erfindung durch ein Mehrbackenfutter zum Verbinden von verschieden dicken Einspannschäften von Werkzeugen mit einer Antriebswelle einer Maschine gelöst,
das einen Backenhalter aufweist, der mit seinem hinteren
Ende mit der Antriebswelle fest verbindbar ist und mindestens zwei Backen umfaßt, die mit Einspannflächen versehen
sind und zum Einspannen des Einspannschaftes des Werkzeuges
im Backenhalter in einer Einspannrichtung bewegbar gelagert
sind, wobei

a) für die Verbindung mit einer hohlen Antriebswelle, in
der sich ein Schläger zum Ausüben von Schlägen auf das
hintere Ende des im Futter eingespannten Einspannschäftes befindet, die Einspannfläche mindestens einer Backe
mit mindestens einer sich im wesentlichen axial erstrekkenden Mitnehmerfläche versehen ist, die mit mindestens
einer Gegenfläche des im Futter locker eingespannten Einspannschaftes zusammenwirkt und das Antriebsdrehmoment
von der Antriebswelle auf das Werkzeug überträgt, ohne
eine Axialverschiebung des Einspannschaftes innerhalb des
Backenhalters zu behindern, und

b) daß der Backenhalter an seinem hinteren Ende einen Durchbruch für die Ausübung der Schläge des
Schlägers unmittelbar auf das hintere Ende des im Futter
locker eingespannten Einspannschaftes aufweist.

Durch die Erfindung wird für Mehrbackenfutter ein völlig
neues Anwendungsgebiet, nämlich die vollwertige Anwendung
bei Bohrhämmern, eröffnet und dadurch die Möglichkeit geschaffen, auch die Werkzeuge für Bohrhämmer, ähnlich wie
bei den Werkzeugen für Schlagbohrmaschinen und dergleichen,
mit einem Einspannschaft zu versehen, der nicht der Werkzeugaufnahme der Antriebsmaschine, sondern dem Werkzeugschaft angepaßt ist. Man kann also z.B. für einen Bohrhammer
durchgehend zylindrische Bohrer verwenden, bei denen lediglich das hintere Ende, nämlich der Einspannschaft, mit mindestens einer angeformten Gegenfläche für die Zusammenwirkung mit der Mitnehmerfläche der Backe versehen ist, z.B. dadurch, daß dieses Ende unrund ausgeführt ist.

Durch das Merkmal a) wird erreicht, daß auch bei einer lockeren, eine Axialbewegung zulassenden Einspannung des Werkzeugschaftes im Mehrbackenfutter das Drehmoment der Antriebswelle der Maschine auf das Werkzeug übertragen wird.

Durch das Merkmal b) wird erreicht, daß trotz der Verwendung eines Mehrbackenfutters ein Schläger, z.B. eines Bohrhammers, unmittelbar auf das hintere Ende des Werkzeuges einwirken kann, ohne daß dabei das Mehrbackenfutter selbst den Schlägen ausgesetzt ist.

Für die lockere Einspannung des Einspannschaftes eines Werkzeuges in dem Mehrbackenfutter gemäß der Erfindung kann bei einer besonders vorteilhaften Ausführungsform mindestens eine auf die Backen einwirkende Feder vorhanden sein, durch deren Kraft die Backen in der Einspannrichtung vorgespannt sind, z.B. in der Weise, daß die Backen mit einer auf dem Backenhalter verstellbar gelagerten Hülse verbunden sind, mittels deren die Backenstellung dem Durchmesser des Einspannschaftes anpaßbar ist und auf die eine Feder einwirkt, durch deren Kraft die Hülse in eine Stellung bewegt wird, in der die Einspannflächen am Einspannschaft eines Werkzeuges anliegen. Bei der Verwendung einer solchen Einstellhülse können auch für die verschiedenen Durchmesser der im Futter einspannbaren Einspannschäfte Rasten für die Hülse vorgesehen sein, so daß dann die Feder weggelassen oder durch eine solche ersetzt werden kann, die die Backen in ihre Offenstellung vorspannt.

Die Erfindung betrifft auch ein Werkzeug mit einem Einspannschaft für das erfindungsgemäße Mehrbackenfutter. Da der Werkzeugschaft eines beim erfindungsgemäßen Mehrbackenfutter verwendeten Werkzeuges im Mehrbackenfutter nur so locker eingespannt werden darf, daß eine durch die Schläge auf das Hinterende des Werkzeuges verursachte Verschiebung desselben im Futter möglich ist, muß am Einspannschaft für die Zusammenwirkung mit der Mitnehmerfläche der Backe des Mehrbackenfutters mindestens eine Gegenfläche angeformt sein.

Die Erfindung hat den Zweck, Werkzeuge dieser Art so auszubilden, daß ihre Einspannschäfte mindestens für einen verhältnismäßig großen Bereich von Werkzeuggrößen nicht wie bei den bekannten Bohrhämmern den Werkzeugaufnahmen derselben angepaßt werden müssen, sondern nur den Werkzeugschäften der Werkzeuge angepaßt werden können. Es soll dadurch die Möglichkeit geschaffen werden, daß bei Werkzeugen dieser Art der Werkzeugschaft und der Einspannschaft eine durchgehende zylindrische Oberfläche haben.

Der Erfindung liegt daher weiterhin die Aufgabe zu Grunde, ein Werkzeug zu schaffen, bei dem auch ein Einspannschaft mit sehr kleinem Durchmesser mit einer Gegenfläche versehen werden kann, die wirksam mit der an der Backe des Mehrbackenfutters vorgesehenen Mitnehmerfläche zusammenwirken kann, die auch Einspannschäften mit großen Durchmessern angepaßt sein muß.

Diese Aufgabe ist bei einem Werkzeug mit einem Einspannschaft, der mit einer sich axial erstreckenden geraden oder schraubenförmigen Rippe versehen ist und zum Einspannen in ein Mehrbackenfutter vorgesehen ist, bei dem mindestens eine Backe mit einer axialen, sich gerade bzw. schraubenförmig erstreckenden Nut versehen ist, gemäß der Erfindung dadurch gelöst, daß die Rippe in Bezug auf alle Diametralebenen des Einspannschaftes unsymmetrisch angeordnet ist.

Die Nut in der Einspannfläche einer Backe eines Mehrbackenfutters gemäß der Erfindung muß so breit sein, daß sie die Rippe eines großen Werkzeuges aufnehmen kann, die so breit ist, daß sie das für das große Werkzeug benötigte große Drehmoment übertragen kann. Durch die erfindungsgemäße Ausbildung kann nun bei einem kleinen Werkzeug zum Übertragen des kleineren Drehmomentes die Rippe wesentlich schmäler ausgeführt werden als die Breite der Nut und dabei erreicht werden, daß die nacheilende Seitenfläche der Rippe im wesentlichen vollständig an der benachbarten Seitenfläche der Nut anliegt und dabei trotzdem in ihrer Breite dem kleinen Durchmesser des Einspannschaftes des kleineren Werkzeuges angepaßt ist, so daß sich die oben genannte unsymmetrische Anordnung der Rippe ergibt. Hierbei kann auch zur weiteren Anpassung an das zu übertragende Drehmoment die Rippenlänge entsprechend gewählt werden.

Bei der oben genannten unsymmetrischen Anordnung der Rippe ist bei einem besonders bevorzugten Ausführungsbeispiel vorgesehen, daß die beim Umlaufen des Werkzeuges nacheilende Seitenfläche der Rippe in einer Diametralebene des Einspannschaftes angeordnet ist. Dadurch werden für die Übertragung des Drehmomentes vom Futter auf das Werkzeug optimale Verhältnisse geschaffen. Bildet hierbei dann noch die beim Umlaufen des Werkzeuges voreilende Seitenfläche der Rippe mit der nacheilenden Seitenfläche einen spitzen von Null verschiedenen Winkel, dann nimmt die Breite der Rippe zu ihrem sie mit dem Einspannschaft verbindenden Fuß hin zu, so daß sie bei gleicher Höhe wesentlich größere Kräfte übertragen kann. Dies hat bei Einspannschäften mit großem Durchmesser den Vorteil, daß die Rippe niedriger ausgeführt werden kann. Bei Einspannschäften mit kleinem Durchmesser ergibt sich wiederum der Vorteil, daß trotz der geringen Menge von Material, das aus dem zylindrischen Schaft zur Bildung der Rippe ausgeformt werden kann, die Rippe hier auch die ausreichende Festigkeit für die Übertragung des erforderlichen Drehmomentes besitzt.

Besonders günstige Verhältnisse ergeben sich in diesem Zusammenhang, wenn die voreilende Seitenfläche der Rippe die Umfangsfläche des Einspannschaftes tangiert.

Um bei einem Werkzeug, bei dem die Rippe schmäler ist als die in der Einspannfläche der Backe eines Mehrbackenfutters vorgesehene Nut, ein seitliches Spiel zwischen Rippe und Nut zu vermeiden, kann bei einer bevorzugten Ausführungsform des Werkzeuges vorgesehen sein, daß die beim Umlaufen des Werkzeuges voreilende Seitenfläche der Rippe mit mindestens einem seitlichen Vorsprung versehen ist. Dadurch wird erreicht, daß mit der Rippe nicht nur das Drehmoment beim Umlaufen des Mehrbackenfutters von diesem auf das Werkzeug einwandfrei übertragen werden kann, sondern daß das Werkzeug auch nicht in entgegengesetzte Richtung innerhalb des sich durch den Eingriff der schmalen Rippe in die breite Nut ergebenden Spieles gedreht werden kann.

Weiterhin betrifft die Erfindung auch einen Bohrersatz, der aus mindestens zwei Bohrern für Bohrungen mit verschiedenen Durchmessern besteht und dessen einzelne Bohrer für einen Bohrhammer mit einem erfindungsgemäßen Mehrbackenfutter verwendbar sind. Die bisher bei Bohrhämmern verwendeten Bohrer mußten immer einen dem Werkzeughalter des Bohrhammers angepaßten Einspannschaft besitzen.

Der Erfindung liegt die Aufgabe zu Grunde, einen Bohrersatz für den oben genannten Zweck zu schaffen, bei dem die einzelnen Bohrer sehr einfach hergestellt werden können.

Diese Aufgabe ist gemäß der Erfindung dadurch gelöst, daß die Einspannschäfte aller Bohrer des Satzes mit den jeweiligen Werkzeugschäften eine durchgehende, zylindrische Außenfläche bilden und daß die Einspannschäfte mit mindestens einer die zylindrische Außenfläche unterbrechenden Fläche versehen sind.

Eine besonders bevorzugte Ausführungsform dieses Bohrersatzes besteht darin, daß die den zylindrischen Umfang der Einspannschäfte der einzelnen Bohrer unterbrechenden Flächen durch die beim Umlaufen des Werkzeuges nacheilenden Seitenflächen mindestens je einer axialen geraden oder schraubenförmigen Rippe gebildet sind und daß die Bohrer mit größeren Durchmessern breite und die Bohrer mit kleineren Durchmessern schmälere Rippen aufweisen.
Hierbei ist es aus den oben genannten Gründen besonders vorteilhaft, wenn mindestens bei den Bohrern für kleinen Bohrungsdurchmesser die Rippen in Bezug auf alle Diametralebenen des Einspannschaftes unsymmetrisch angeordnet sind.

Die Erfindung betrifft auch ein Verfahren zum spanlosen Formen mindestens eines Teiles des Werkzeuges, nämlich des Einspannschaftes desselben. Dadurch, daß durch die erfindungsgemäße Anordnung der Rippe auf dem Einspannschaft dieser in Bezug auf alle Diametralebenen unsymmetrisch ist, tritt beim spanlosen Umformen eines Rohlings in diese unsymmetrische Form ein Drehmoment auf, durch das dann der Rohling während des Umformens im Gesenk gedreht und dadurch die gewünschte Form nicht erreicht wird.

Der Erfindung liegt daher die Aufgabe zu Grunde, ein Verfahren anzugeben, durch das dieses Drehen des Rohlings im Gesenk vermieden werden kann.

Diese Aufgabe ist gemäß der Erfindung dadurch gelöst, daß zum Formen eines in Bezug auf alle Diametralebenen unsymmetrischen Werkzeugteile ein Gesenk für mindestens ein Paar von spiegelbildlich zueinander angeordneten und mit den gleichen Enden aneinanderstoßenden Werkzeugteilen verwendet wird, daß mit diesem Gesenk ein sich über die ganze Länge mindestens eines Paares der Werkzeugteile erstreckender Rohling in die gewünschte Form umgeformt wird und daß dann das so erhaltene Paar von Werkzeugteilen in die einzelnen Werkzeugteile aufgeteilt wird. Dadurch werden in ein- und demselben

- 10a -

Rohling beim Formen der beiden Werkzeugteile eines Paares
entgegengesetzte Drehmomente verursacht, die sich innerhalb des Rohlinges aufheben.

Die Erfindung ist in der folgenden Beschreibung von in
den Zeichnungen dargestellten Ausführungsbeispielen im einzelnen erläutert.

- 11 -

Es zeigen:

Fig. 1 einen Axialschnitt des vorderen Endes des Ausführungsbeispieles eines erfindungsgemäßen Zweibackenfutters, in das der Einspannschaft eines Bohrers mit großem Durchmesser eingespannt ist;

Fig. 2 einen Schnitt nach der Linie II - II in Fig. 1;

Fig. 3 einen der Fig. 1 entsprechenden Schnitt mit in das Zweibackenfutter eingespanntem Einspannschaft eines Bohrers mit kleinem Durchmesser;

Fig. 4 einen Schnitt nach der Linie IV - IV. in Fig. 3;

Fig. 5 und 6 zwei in zueinander senkrechten Blickrichtungen dargestellte Seitenansichten des Einspannschaftes eines Bohrers für das Futter nach Fig. 1 - 4;

Fig. 7 einen Schnitt nach der Linie VII - VII in Fig. 5;

Fig. 8, 9 und 10 den Fig. 5, 6 und 7 entsprechende Darstellungen eines abgewandelten Ausführungsbeispieles des Einspannschaftes eines Bohrers;

Fig. 11 und 12    den Fig. 3 bzw. 4 und

Fig. 13 und 14    den Fig. 1 bzw. 2 entsprechende
                  Darstellungen von zwei weiteren
                  Ausführungsbeispielen von Zweibackenfuttern;

Fig. 15 und 16    Draufsichten von zwei Sätzen von
                  Bohrern für das Mehrbackenfutter
                  nach den Fig. 1 bis 4 bzw. Fig.
                  13 und 14;

Fig. 17           eine Draufsicht auf ein Paar von
                  Einspannschäften, die nach dem
                  erfindungsgemäßen Verfahren her-
                  gestellt wurden.

- 13 -

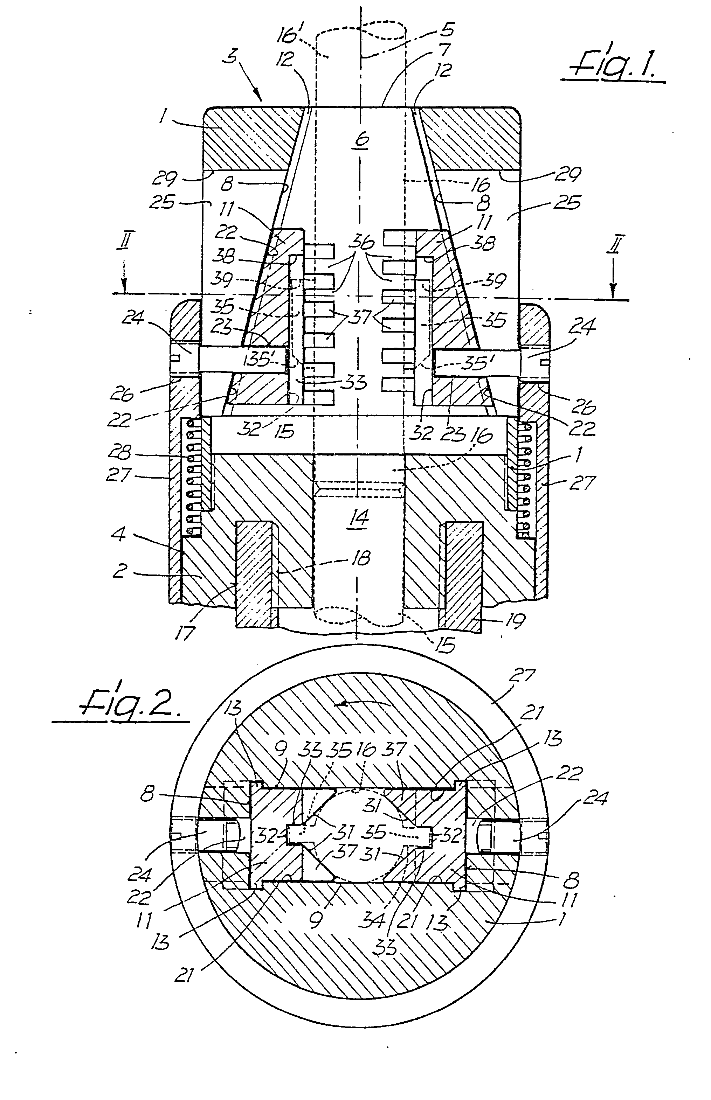

Das Ausführungsbeispiel eines Zweibackenfutters gemäß der Erfindung für einen Bohrhammer ist in der Zeichnung nur stark schematisch vereinfacht dargestellt. Ein aus einem vorderen Teil 1 und einem hinteren Teil 2 zusammengeschraubter Backenhalter 3, dessen Außenfläche 4 eine zu seiner Achse 5 koaxiale Rotationsfläche bildet, weist einen nach vorn, in Fig. 1 nach oben, offenen Hohlraum 6 auf, der in einem zur Zeichenebene von Fig. 1 parallelen Schnitt die Form eines gleichschenkligen Trapezes und in einem dazu senkrechten Axialschnitt die Form eines Rechteckes hat. Dadurch weist der Hohlraum 6 zwei einander gegenüberliegende und zur vorderen Öffnung 7 konvergierende Führungsebenen 8 und zwei einander parallele Führungsebenen 9 für zwei Backen 11 auf. Die einander parallelen Führungsebenen 9 weisen in ihren Rändern, die an die konvergierenden Führungsebenen 8 angrenzen, Führungsnuten 12 auf, in die an den Backen 11 angeformte Führungsleisten 13 eingreifen.

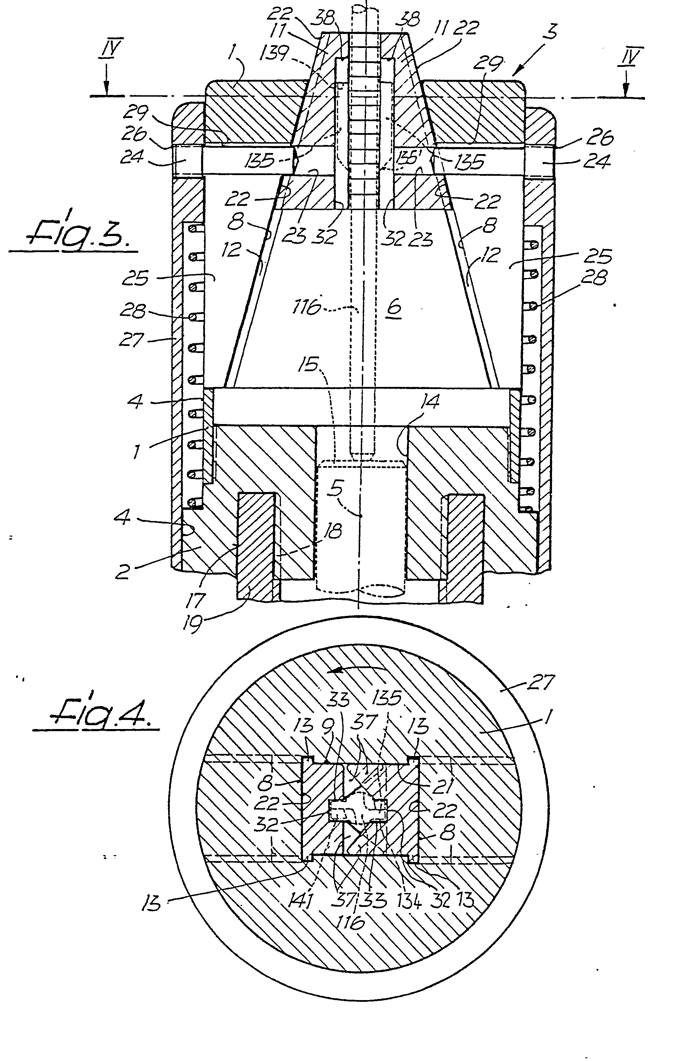

In das in Fig. 1 untere, breitere Ende des Hohlraumes 6 mündet ein zur Achse 5 koaxialer, zylindrischer Durchbruch 14, der im hinteren Teil 2 des Backenhalters 3 vorgesehen ist und in den ein in der Zeichnung gestrichelt dargestellter Schlagbolzen 15 eines nicht dargestellten Schlägers eines Bohrhammers und das hintere Ende eines im dargestellten Mehrbackenfutter eingespannten, in den Fig. 1 und 3 gestrichelt dargestellten Einspannschaftes 16 bzw. 116 eines Bohrers 16' bzw. 116' eingreifen kann.

An seinem in Fig. 1 unten liegenden hinteren Ende ist der hintere Teil 2 des Backenhalters 3 mit einer zur Achse 5 koaxialen Ringnut 17 versehen, die in ihrer radial innen liegenden Wandfläche mit einem Außengewinde 18 versehen ist, mittels dessen der Backenhalter 3 und damit das ganze Zweibackenfutter an eine rohrförmige Antriebswelle 19 eines Bohrhammers anschraubbar ist, die im Bohrhammer axial unverschiebbar, aber drehbar gelagert und vom Antrieb des Bohrhammers für eine Drehung um ihre Achse in Richtung der in den Fig. 2 und 4 eingezeichneten Pfeile angetrieben wird und für die Führung des im Bohrhammer axial hin und her bewegten,mit dem Schlagbolzen 15 versehenen Schlägers dient.

Die beiden Backen 11 haben einander parallele ebene Außenflächen 21, mit denen sie an den einander parallelen Führungsebenen 9 anliegen, und gegenüber der Achse 5 geneigte ebene Flächen 22, mit denen sie an den zur Öffnung 7 konvergierenden Führungsebenen 8 anliegen, so daß die Führungsebenen 8 und 9 zusammen mit den Führungsnuten 12 formschlüssige Führungen für eine axiale Verschiebung und eine durch diese verursachte radiale Verschiebung der Backen 11 bilden. In Bohrungen 23 der Backen 11 greifen Zapfen 24 lose ein, die sich durch Schlitze 25 im Backenhalter 3 parallel zu den Führungsebenen 9 erstrecken, radial nach außen ragen und dort in Gewindebohrungen 26 einer Hülse 27 eingeschraubt sind, die auf dem Backenhalter 3 axial verschiebbar gelagert ist und auf die eine Schraubendruckfeder 28 einwirkt, die die Hülse 27 so weit nach vorne zu drücken sucht, bis die Zapfen 24 an den vorderen Enden 29 der Schlitze 25 anstoßen.

An den einander zugekehrten Seiten bilden die Backen 11 zwei divergierende Einspannflächen 31, die bei dem dargestellten Ausführungsbeispiel als Ebenen ausgebildet sind und für die Anlage am zylindrischen Einspannschaft 16,116 vorgesehen sind. Diese Einspannflächen 31 sind symmetrisch zu einer zu den Führungsebenen 9 parallelen Axialebene des Backenhalters 3 angeordnet und gehen an ihren einander benachbarten Rändern in eine sich axial erstreckende Nut 32 über, deren bei der Drehung des Backenhalters 11 nacheilende Seitenfläche eine Mitnehmerfläche 33 bildet, die mit einer entsprechenden Gegenfläche 34, 134 des Einspannschaftes 16 bzw. 116 des Bohrers zusammenwirkt, die wiederum durch eine am Einspannschaft 16, 116 angestauchte Rippe 35 bzw. 135 gebildet ist. Die die Einspannflächen 31 bildenden Teile der Backen 11 sind durch

Schlitze 36 unterbrochen, die bei den beiden Backen 11 gegeneinander so versetzt angeordnet und so breit ausgebildet sind, daß beim radialen Zusammenschieben der Backen die die Einspannflächen bildenden zinkenartigen Teile 37 der einen Backe in die Schlitze 36 der anderen Backe eingreifen, wie das aus Fig. 4 ersichtlich ist.

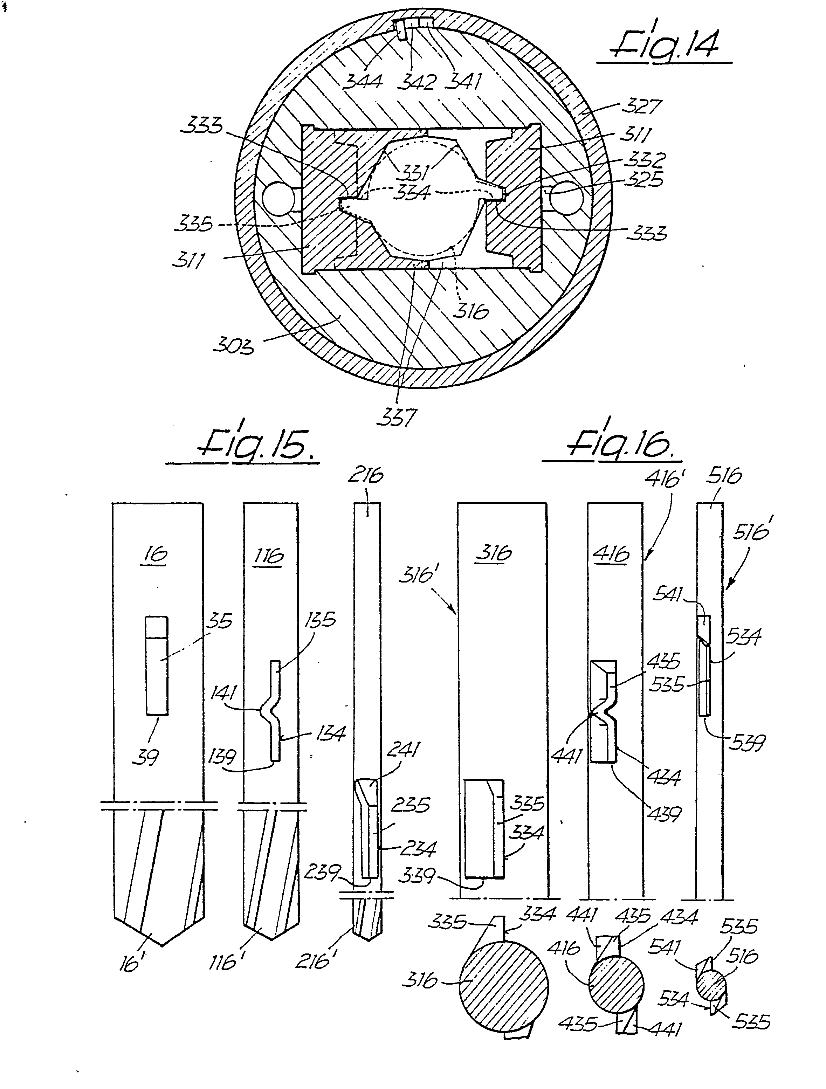

Die Nuten 32 in den Backen 11 sind nach vorne begrenzt, so daß die Nutenenden Anschlagflächen 38 bilden, die mit den durch die zur Achse 5 im wesentlichen senkrechten vorderen Enden der Rippen 35, 135 des Einspannschaftes 16,116 gebildeten Anschlagflächen 39, 139 Anschläge bilden, die die axiale Verschiebbarkeit des Einspannschaftes 16, 116 nach vorne begrenzen, so daß der im Zweibackenfutter eingespannte Einspannschaft 16, 116 trotz einer lockeren Einspannung nicht aus dem Futter herausfallen kann. Hierbei ist das die Rippe 35, 135 enthaltende Ende des Einspannschaftes nur so lang, daß, wenn das vordere Ende der Rippe 35, 135 an dem vorderen Nutenende anliegt, sich das vordere Ende des Schlagbolzens 15 auf Grund seines begrenzten Hubes bei seiner vordersten Stellung in einem Abstand von dem hinteren Ende des Einspannschaftes 16, 116 befindet. Hierdurch ergibt sich ein kennzeichnendes Merkmal der für dieses Zweibackenfutter vorgesehenen Bohrer, nämlich daß mit abnehmendem Durchmesser des Einspannschaftes 16,116 und damit des Bohrers die Abstände der vorderen Enden der Rippen 35, 135 von den hinteren Enden der Einspannschäfte zunehmen, wie das aus einem Vergleich der Fig. 1 und 3 und aus Fig. 15 hervorgeht.

Im nicht gebrauchten Zustand werden die beiden Backen 11 durch die Feder 28 so weit nach vorne geschoben, daß die Zapfen 24 an den vorderen Enden 29 der Schlitze 25 anliegen. Um den Einspannschaft 16 möglichst einfach in das Zweibackenfutter einführen zu können, sind die hinteren Enden 35' der Rippen 35, 135 um 45° gegenüber der Achse 5 abgeschrägt.

Wenn mit einem Bohrhammer, an dessen Antriebswelle 19 das oben beschriebene Mehrbackenfutter angeschraubt ist, gebohrt werden soll, wird der jeweils erforderliche Bohrer mit seinem Einspannschaft 16,/116 an die vorne aus dem Backenhalter 3 herausragenden vorderen Enden der Backen 11 (Fig. 3) gedrückt, so daß die Backen 11 gegen die Kraft der Feder 29 nach hinten verschoben und durch die Führung in den Führungsnuten 12 radial nach außen verstellt werden, bis der Einspannschaft 16,/116 zwischen die Backen 11 eingreifen kann, was durch die abgeschrägten Enden 35',135' der Rippen erleichtert wird. Sobald die am Einspannschaft 16,116 vorgesehenen Rippen 35,/135 in die Nuten 32 der Backen 11 eingreifen, springen die Backen 11 wieder radial zusammen, bis ihre Einspannflächen 31 am Umfang des Einspannschaftes 16,116 durch den Druck der Feder locker anliegen. Wird in dieser Stellung des Einspannschaftes 16,/116 mit dem Bohrhammer gebohrt, dann wird durch den Arbeitsdruck der Bohrer nach hinten gedrückt, wobei seine hinterste Stellung durch die hinterste Stellung des Schlägers definiert ist. Durch die vom Schlagbolzen 15 ausgeübten Schläge wird der Bohrer nach vorne gestoßen, was durch die lockere Anlage der Einspannflächen 31 am Einspannschaft 16,/116 ermöglicht wird. Das Zweibackenfutter wird hierbei durch diese Stöße nicht belastet, weil der Hub des Schlägers, wie oben ausgeführt, begrenzt ist und daher der axial nach vorne verschiebbare Bohrer mit seinen Anschlagflächen 39,/139 durch die Schläge des Schlagbolzens nicht an den Anschlagflächen 38 der Backen 11 anstößt. Damit das hintere Ende des Einspannschaftes 16,/116 den Schlagbolzen 15 in dessen hintersten Stellung nicht berühren kann, können die Nuten 32 auch an ihren hinteren Enden begrenzt sein.

Wie das die Fig. 1 bis 4 zeigen, können in dem Zweibackenfutter Bohrer mit verschieden starken Einspannschäften 16,116 eingespannt werden. Hierbei wird die Drehbewegung der Antriebswelle 19 des Bohrhammers durch die Mitnehmerflächen 33 der Backen 11 über die Gegenflächen 34 der Rippen
35 und über den Einspannschaft 16 auf den Bohrer übertragen. Aus Fig. 1 ist ersichtlich, daß bei diesem Ausführungsbeispiel das hintere Ende des dicksten Einspannschaftes im Durchbruch 14 geführt ist. Das ist jedoch nicht
unbedingt notwendig. Der Schlagbolzen 14 kann auch so ausgebildet sein, daß er in den Zwischenraum zwischen dem
hinteren Ende der Backen 11 und dem Teil 2 eingreift.

In ähnlicher Weise wie das oben beschriebene und in der
Zeichnung dargestellte Zweibackenfutter kann auch ein Futter mit mehr als zwei Backen, z.B. ein Dreibackenfutter,
ausgebildet sein. Auch ist es nicht notwendig, daß die
Führungsflächen des Backenhalters und die an diesen anliegenden Flächen der Backen eben sind. Diese können auch
z.B. zylindrisch sein. In einem solchen Fall müssen dann
allerdings den Führungsleisten 13 entsprechende Führungsteile vorgesehen sein, die eine axiale Führung der Backen
ermöglichen, jedoch eine ungeführte Radialbewegung und
eine Drehung um die Achse 5 verhindern.

Um eine optimale Übertragung der Schlagenergie sicherzustellen, wenn der Schlagbolzen 15 auf das hintere Ende des Einspannschaftes 16 stößt, können die in den Backen 11 vorgesehenen Nuten 32 für die entsprechend geformten Rippen 35,1:
des Einspannschaftes 16 einen schraubenförmigen Verlauf haben, der so gerichtet ist, daß durch das von den Backen 11
auf den Einspannschaft 16 übertragene Drehmoment eine axial
Kraftkomponente auf den Einspannschaft 16 verursacht wird,
durch die der Einspannschaft nach hinten gedrückt wird.

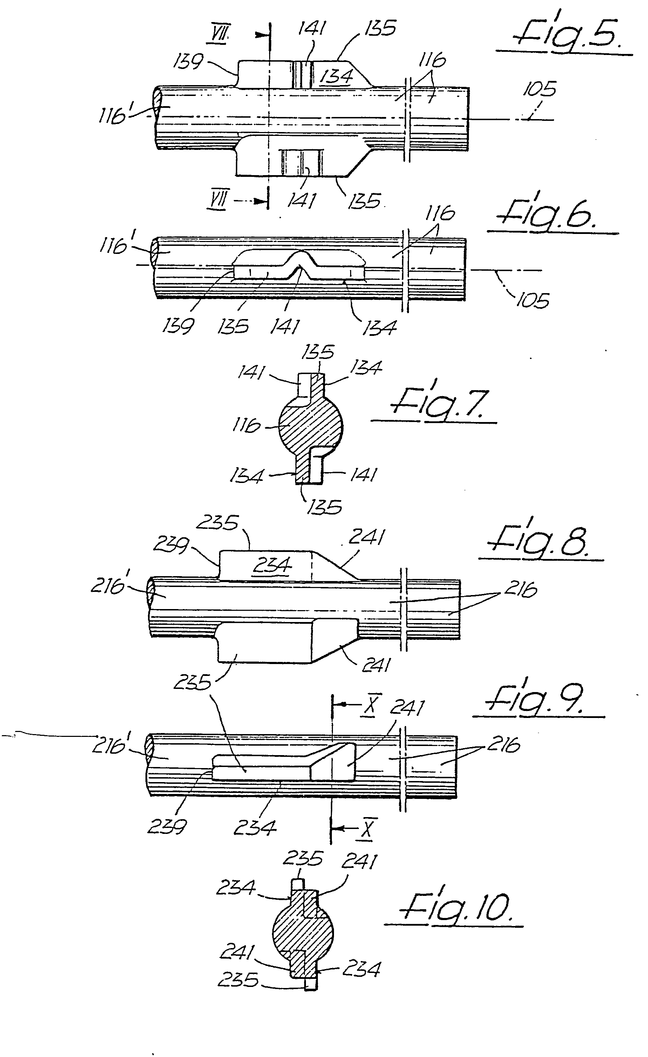

In den Fig. 5 bis 7 ist ein Ausführungsbeispiel eines Einspannschaftes eines Bohrers dargestellt, der mit dem oben
beschriebenen und in der Zeichnung dargestellten Zweibacker
futter oder einem entsprechend ausgebildeten Mehrbackenfutter verwendbar ist. Der dort dargestellte Einspannschaft
116 eines dünnen Bohrers 116' hat den gleichen Durchmesser wie der Bohrer 116' und ist mit zwei Rippen 135 versehen, die schmäler sind als die Backennut 32. Jede dieser schmäleren Rippe 135 soll jedoch die Mitnehmerfläche 33 mit ihrer Gegenfläche 134 vollflächig berühren. Aus diesem Grunde muß die Gegenfläche 134 in gleichem Abstand von der ihr parallelen Diametralebene angeordnet sein, wie die entsprechende Gegenfläche einer die Nut 32 voll ausfüllenden Rippe. Daraus ergibt sich, daß die Rippe 135 in Bezug auf alle Diametralebenen ihres Einspannschaftes 116 unsymmetrisch angeordnet ist. Beim dargestellten Ausführungsbeispiel liegt die der Gegenfläche 134 gegenüberliegende, beim Umlaufen des Bohrers voreilende Seitenfläche der Rippe in der zur Gegenfläche parallelen Diametralebene des Einspannschaftes 116. Um jedoch trotz dieser schmäleren Ausbildung jeder Rippe 135 nicht nur eine formschlüssige Verbindung ihrer Gegenfläche 134 mit der Mitnehmerfläche 33 der Backe, sondern auch eine formschlüssige Verbindung der der Gegenfläche 134 gegenüberliegenden Fläche der Rippe mit der der Mitnehmerfläche 33 gegenüberliegenden Fläche der Nut 32 zu erhalten und dadurch eine Relativdrehung des Bohrerschaftes zu den Backen 11 nach beiden Richtungen hin zu verhindern, ist etwa im mittleren Bereich der Rippe 135 eine Einbuchtung 141 vorgesehen, die an der der Mitnehmerfläche 33 gegenüberliegenden Fläche der Nut 32 anliegt, wenn die Rippe 135 in die Nut 32 der Backe 11 eingreift.

- 18a -

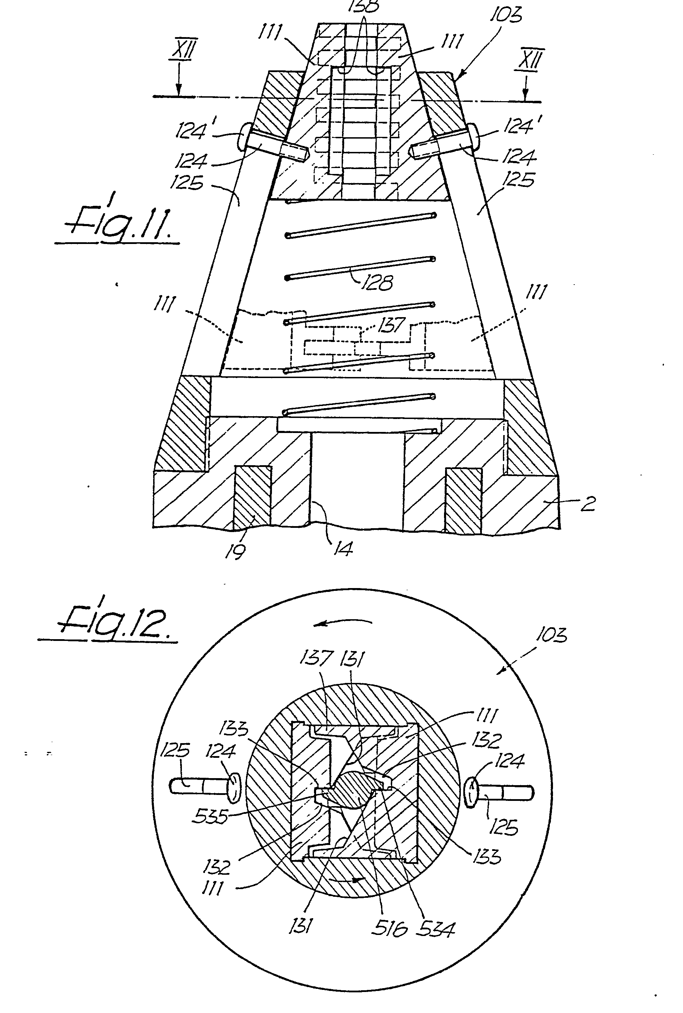

In den Fig. 8 bis 10 ist ein weiteres Ausführungsbeispiel eines Bohrers 216' dargestellt, bei dem die Rippe 235 ebenfalls schmäler ausgebildet ist als die Nut 32. Auch hier ist die Rippe 235 in Bezug auf alle Diametralebenen des Einspannschaftes 216' unsymmetrisch angeordnet und ihre der Gegenfläche 234 gegenüberliegende, beim Umlaufen des Bohrers voreilende Seitenfläche liegt in der zur Gegenfläche 234 parallelen Diametralebene des Einspannschaftes. Zur Bildung der formschlüssigen Verbindung auf der der Gegenfläche 234 gegenüberliegenden Seite der Rippe ist hier am hinteren Ende der Rippe eine Abflachung 241 vorgesehen, die einen entsprechenden Vorsprung bildet und so ebenfalls verhindert, daß der Bohrer im Futter hin und her gedreht werden kann.

In allen oben beschriebenen Fällen bilden die hinteren Endflächen der Rippen ebenso wie die Endflächen 35' und 135' der Rippen 35 bzw. 135 mit der Achse des Einspannschaftes 116 bzw. 216 einen Winkel von 45°, wobei diese Abschrägung des hinteren Endes bei dem Ausführungsbeispiel nach den Fig. 8 bis 10 teilweise von der Abflachung 241 gebildet wird. Die vorderen Enden der Rippen 135 und 235 bilden hier die im wesentlichen recht-

- 19 -

winklig zur Achse des Schaftes verlaufenden Anschlagflächen 139 bzw. 239.

Bei dem in den Fig. 1 bis 4 dargestellten Ausführungsbeispiel greift der Schläger mittels des Schlagbolzens 15 in
den Durchbruch 14 des Backenhalters 3 ein, um auf das Ende
des Einspannschaftes 16 einwirken zu können. Der Einspannschaft des Werkzeuges und der Bohrhammer können jedoch auch
so ausgebildet sein, daß der Einspannschaft durch den Durchbruch 14 in den Bohrhammer so eingreift, daß ein Schläger
verwendbar ist, der nicht in den Durchbruch 14 eingreifen
muß, um unmittelbar auf das Ende des Einspannschaftes einwirken zu können. Dies hat den Vorteil, daß der Durchmesser des Durchbruches 14 und der Schläger nicht aufeinander
abgestimmt sein müssen, so daß das Mehrbackenfutter nur in
Bezug auf die Schraubverbindung zum Anschrauben an den Bohrhammer diesem, im übrigen aber nur den Werkzeugschäften angepaßt sein muß.

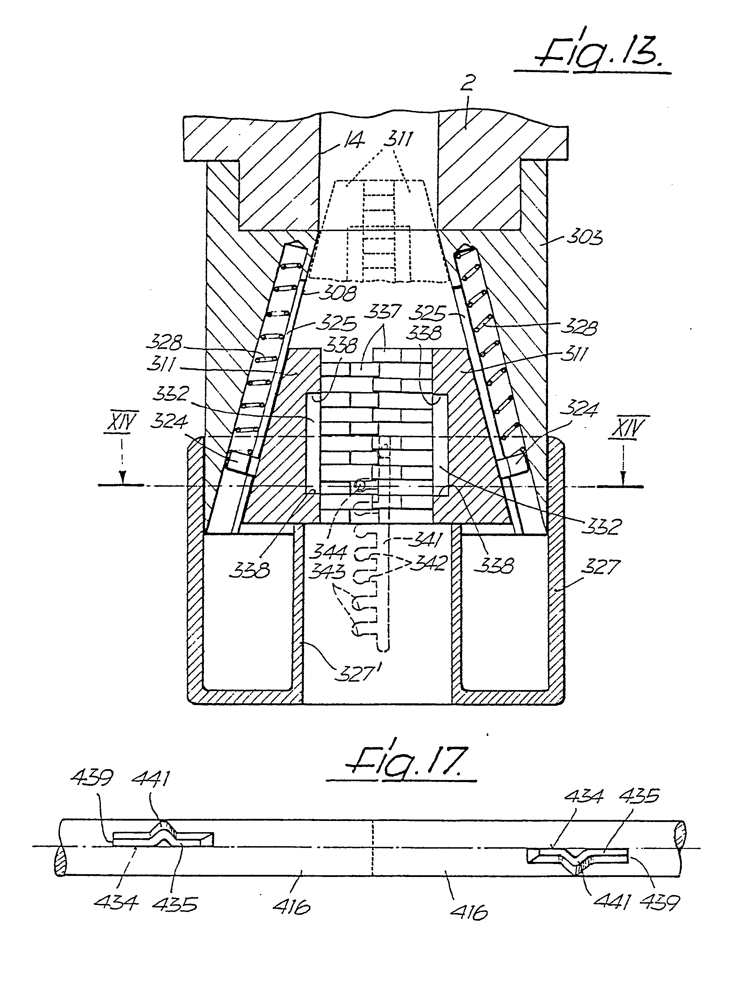

In den Fig. 11 und 12 ist ein zweites Ausführungsbeispiel
eines Zweibackenfutters dargestellt. Die dem in den Fig. 1
bis 4 dargestellten ersten Ausführungsbeispiel entsprechenden Teile dieses Ausführungsbeispieles sind mit um 100 vergrößerten Bezugszahlen bezeichnet, so daß durch diesen Hinweis auf die Beschreibung des ersten Ausführungsbeispieles
Bezug genommen wird.

Das Ausführungsbeispiel nach den Fig. 11 und 12 unterscheidet sich von dem ersten Ausführungsbeispiel dadurch, daß
hier der Backenhalter 103 eine konische Außenfläche aufweist
und daß die zinkenartigen Teile 137 der Backen 111 so lang
ausgeführt sind, daß sie auch beim Einspannen des dicksten
Einspannschaftes, wie das in Fig. 11 gestrichelt dargestellt
ist, ineinandergreifen. Dadurch sind die beiden Backen auch
in der am weitesten aufgeweiteten Stellung für eine gemeinsame axiale Bewegung miteinander verbunden. Ein weiterer Unterschied besteht darin, daß die durch die Schlitze 125 hindurchgreifenden Zapfen 124 hier mit den Backen 111 fest verbunden, nämlich verschraubt sind und daß diese Zapfen aus der konischen Außenfläche des Backenhalters 103 leicht vorstehende Köpfe 124' aufweisen, mittels deren die Backen 111 gegen die Kraft der hier unmittelbar auf die Backen 111 einwirkenden Schraubenfeder 128 von Hand axial verschoben werden können, um z.B. einen im Futter eingespannten Bohrer herausnehmen zu können. Die konvergierenden Führungsebenen 108 des Backenträgers sind den durch die in der Mittelebene der Schlitze 125 verlaufenden Mantellinien der konischen Außenfläche parallel. Die Nuten 132 in den Einspannflächen 131 der Backen 111 sind bei diesem Ausführungsbeispiel gegenüber allen Diametralebenen des Futters unsymmetrisch angeordnet, und zwar so, daß die Mitnehmerflächen in einer Diametralebene des Futters angeordnet sind. Die den Mitnehmerflächen 133 gegenüberliegenden Seitenflächen der Nuten 132 sind zu einer ihnen nacheilenden Diametralebene des Futters parallel und bilden somit mit der Mitnehmerfläche einen spitzen Winkel. Hierbei ist die Anordnung dieser der Mitnehmerfläche gegenüberliegenden Seitenfläche der Nut 132 so getroffen, daß sie beim dicksten Einspannschaft in einer Tangentialebene zum Einspannschaft liegt. Dadurch wird der Vorteil erreicht, daß auch der Einspannschaft eines eingespannten Werkzeuges entsprechend geformte Rippen aufweisen kann, die durch diese Formgebung eine besonders große Festigkeit aufweisen.

In Fig. 12 ist der dünnste mit dem dargestellten Futter einspannbare Einspannschaft 516 dargestellt, bei dem die Rippen 535 ebenfalls in Bezug auf alle Diametralebenen unsymmetrisch angeordnet sind, und zwar so, daß die nacheilenden Seitenflächen, nämlich die Gegenflächen 534, in einer Diametralebene des Schaftes liegen und die ihnen gegenüberliegenden Seitenflächen der Rippen 535 in Tangentialebenen des Schaftes angeordnet sind. Dadurch werden für die Übertragung des Drehmomentes vom Futter auf den Einspannschaft optimale Verhältnisse geschaffen. Außerdem haben die Rippen eine besonders große Festigkeit, da ihre Dicke zu dem mit dem Einspannschaft verbundenen Rippenfuß zunimmt.

Bei dem in den Fig. 13 und 14 dargestellten Ausführungsbeispiel sind die dem ersten Ausführungsbeispiel entsprechenden Teile mit um 300 vergrößerten Bezugszahlen bezeichnet, um mit diesem Bezug auf das erste Ausführungsbeispiel die Beschreibung einfacher zu gestalten.

Dieses Ausführungsbeispiel unterscheidet sich von den beiden vorher beschriebenen Ausführungsbeispielen vor allem dadurch, daß hier die konvergierenden Führungsebenen 308 nach hinten, also zur Maschine hin, konvergieren, oder anders ausgedrückt, zum Werkzeug hin divergieren. Die beiden Backen 311 sind hier ebenso wie bei dem Ausführungsbeispiel nach den Fig. 11 und 12 durch die zinkenartigen Teile 337 auch in ihrer in den Fig. 13 und 14 dargestellten am meisten aufgeweiteten Stellung miteinander verbunden. In den Führungsebenen 308 parallelen Bohrungen des Backenhalters 303 sind Schraubendruckfedern 328 vorgesehen, die über in diese Bohrungen durch Schlitze 325 eingreifende Zapfen 324 mit den Backen 311 verbunden sind und diese gerade umgekehrt wie bei den vorher beschriebenen Ausführungsbeispielen in ihre aufgeweitete Stellung drücken.

Ähnlich wie bei dem ersten Ausführungsbeispiel ist auch hier eine auf der zylindrischen Außenfläche des Backenhalters 303 geführte, als Handgriff dienende Hülse 327 vorgesehen, die jedoch nicht mit den Backen 311 verbunden ist, sondern vor dem vorderen Ende des Backenhalters 303 vorragt und an ihrem vordersten Ende mit einem inneren, zum Außenmantel koaxialen, zylindrischen Rand 327' versehen ist, der an der vorderen Stirnfläche der Backen 311 anliegt, so daß mittels dieser Hülse 327 die Backen 311 aus der in der Fig. 13 ausgezogen dargestellten vordersten Stellung in die gestrichelt dargestellte hinterste Stellung gegen die Kraft der Federn 328 verschoben werden können. Um die Backen in verschieden dicken Einspannschäften angepaßten Stellungen halten zu können, ist in der Innenfläche des Außenmantels der Hülse 327 eine Axialnut 341 vorgesehen, in die in Diametralebenen verlaufende Abzweigungen 342 münden, die an ihren Enden an der vorderen Seite kleine Einbuchtungen 343 aufweisen, so daß diese Axialnut 341 mit den Abzweigungen 342 in Zusammenwirkung mit einem am Backenhalter 303 vorgesehenen Stift 344 eine der Anzahl der Abzweigungen 342 entsprechende Anzahl von Bajonettverschlüssen für die verschiedenen Stellungen der Hülse 327 bildet. Die Nut 341 ist an ihrem hinteren Ende geschlossen, so daß die Hülse 327 nicht von dem Backenhalter 303 herunterfallen kann.

Die Nuten 332 dieses Ausführungsbeispieles sind, wie das aus Fig. 14 ersichtlich ist, im Querschnitt ebenso ausgebildet wie bei dem Ausführungsbeispiel nach den Fig. 11 und 12. Durch diese Ausbildung der Nuten und die entsprechende Ausbildung der Rippen ergibt es sich, wie das aus Fig. 12 ersichtlich ist, daß innerhalb der Nuten der Einspannschaft 516 eines dünneren Werkzeuges nur an zwei diametral gegenüberliegenden Stellen durch die Einspannflächen 131 bzw. 331 gehalten ist. Um daher den Einspannschaft innerhalb des Futters an vier paarweise einander gegenüberliegenden Stellen zu halten, sind die Nuten 132 bzw. 332 nicht nur an ihren vorderen, die Anschlagflächen 138 bzw. 338 bildenden Enden, sondern auch an ihren hinteren Enden begrenzt, so daß die Einspannflächen 131 bzw. 331 vor und hinter den Nuten nicht durch diese unterbrochen sind und dadurch die gewünschte Stützfunktion erfüllen.

In Fig. 15 ist ein Satz von drei Bohrern 16', 116' und 216' dargestellt, deren Einspannschäfte 16 bzw. 116 und 216 mit den jeweiligen Bohrerschäften eine durchgehende, zylindrische Außenfläche bilden und mit je zwei diametral einander gegenüberliegenden Rippen 35, 135 und 235 versehen sind. Der Abstand des vorderen Endes der Rippe 35 des dicksten Einspannschaftes 16 hat von den drei Bohrern den kleinsten Abstand von dem hinteren Ende des Einspannschaftes. Dieser Abstand des vorderen Endes der Rippe nimmt beim Einspannschaft 116 und beim Einspannschaft 235 mit abnehmendem Durchmesser zu. Die in den Fig. 5 bis 10 dargestellten Einspannschäfte mit Rippen sind die mit den gleichen Bezugszahlen versehenen Einspannschäfte nach Fig.15, so daß sich eine nähere Beschreibung derselben erübrigt.

In Fig. 16 sind die Einspannschäfte 316, 416 und 516 von drei einen zweiten Bohrersatz bildenden Bohrern dargestellt. Die Bohrer dieses Satzes sind mit den Nuten 132 und 332 angepaßten Rippen 335, 435 und 535 versehen, bei denen sich jedoch, anders wie bei dem in Fig. 15 dargestellten Satz, die Abstände der vorderen Enden der Rippen vom hinteren Ende des Schaftes mit abnehmendem Schaftdurchmesser abnehmen. Bei allen drei Bohrern dieses Satzes befindet sich die für die Zusammenwirkung der Mitnehmerfläche 133 und 333 der Backennuten 132 bzw. 332 zusammenwirkenden Gegenflächen 334, 434 und 534 in einer Diametralebene des Schaftes, während die andere Seitenfläche mit der Gegenfläche einen spitzen Winkel bildet,und zwar so, daß die den Gegenflächen gegenüberliegenden voreilenden Seitenflächen der Rippen 335, 435, 535 in Tangentialebenen des Einspannschaftes liegen.Auch bei diesem Satz sind die Rippen 435 und 535 der dünneren Einspannschäfte 416 bzw. 516 dünner als die Rippe 334 des dicksten Einspannschaftes 316 und weisen daher auf der der Gegenfläche 434 und 534 gegenüberliegenden Seite einen durch eine Einbuchtung 441 bzw. eine Abflachung 541 gebildeten Vorsprung auf, der eine Anschlagfläche an der der Mitnehmerfläche der Nut gegenüberliegenden Fläche bildet. Ebenso wie bei den Bohrern nach Fig. 15 bilden auch hier die vorderen Enden der Rippen 334, 434 und 534 mit den von den vorderen Enden der Nuten 132 und 332 gebildeten Anschlagflächen 138 bzw. 338 zusammenwirkende Anschlagflächen 339 bzw. 439 und 539.

Werkzeuge der hier beschriebenen Art, insbesondere ihrer Schäfte, werden durch spanloses Umformen eines stangen- oder
rohrförmigen Rohlings hergestellt, wobei der Rohling in
einem Gesenk durch Pressen, Schmieden oder Hämmern in die
gewünschte Form umgeformt wird.
Ist das Werkzeug und im vorliegenden Fall der Einspannschaft in Bezug auf eine Diametralebene symmetrisch, dann
kann das Gesenk so hergestellt werden, daß beim Umformen
des Rohlings kein Drehmoment auf den Rohling ausgeübt wird.

Ist jedoch das Werkzeug, z.B. durch die unsymmetrische Ausbildung des Einspannschaftes, wie das oben in Verbindung
mit den Werkzeugschäften 316, 416 und 516 beschrieben ist,
in Bezug auf alle Diametralebenen des Werkzeugschaftes
unsymmetrisch, dann ist es unvermeidlich, daß beim Umformen eines rohr- oder stangenförmigen Rohlings ein Drehmoment verursacht wird, durch das der Rohling während des
Umformens im Gesenk um seine Achse gedreht und dadurch
die gewünschte Form nicht erreicht wird. Um eine solche
Drehung des Rohlings beim Umformen im Gesenk zu vermeiden,
wird zum Formen eines in Bezug auf alle Diametralebenen
unsymmetrischen Werkzeugteiles, z.B. eines so gestalteten
Einspannschaftes, ein Gesenk für mindestens ein Paar von
spiegelbildlich zueinander angeordneten und mit gleichen
Enden aneinanderstoßenden Werkzeugteilen verwendet. In
ein solches Gesenk wird dann ein Rohling eingelegt, der
sich über die ganze Länge des Gesenkes und damit mindestens
des einen Paares der Werkzeugteile erstreckt. Beim Umformen
wird dadurch mindestens ein Paar von Werkzeugen gebildet,
die spiegelbildlich mit gleichen Enden aneinanderstoßen.
In Fig. 17 ist ein auf diese Weise hergestelltes Werkzeugpaar dargestellt, bei dem zwei Einspannschäfte 416 mit ihren
hinteren Enden an der gestrichelten Linie ineinander über-

- 24a -

gehen. Dadurch wird erreicht, daß auf den Rohling beim Formen der beiden Einspannschäfte 416 entgegengesetzte Drehmomente verursacht werden, die sich am Übergang von einem Schaft auf den anderen aufheben.

Sobald ein solches Paar ausgeformt ist, wird es dann an der in Fig. 17 gestrichelt angegebenen Stelle durchgeschnitten. Auf diese Weise können auch Gesenke für mehr als zwei Paare von Werkzeugen hergestellt werden, wobei das Gesenk möglichst so ausgebildet wird, daß die Formen für diejenigen Teile von Werkzeugpaaren, die unsymmetrisch sind, unmittelbar ineinander übergeben, wie das in Bezug auf die Einspannschäfte 416 in Fig. 17 dargestellt ist.

- 25 / Ansprüche

Patentansprüche

1. Mehrbackenfutter zum Verbinden von verschieden dikken Einspannschäften (16, 116, 216, 316, 416, 516) von Werkzeugen mit einer Antriebswelle (19) einer Maschine, das einen Backenhalter (3, 103, 303) aufweist, der mit seinem hinteren Ende mit der Antriebswelle (19) fest verbindbar ist und mindestens zwei Backen (11, 111, 311) umfaßt, die mit Einspannflächen (31, 131, 331) versehen sind und zum Einspannen des Einspannschaftes (16, 116, 216, 316, 416, 516) des Werkzeuges im Backenhalter in einer Einspannrichtung bewegbar gelagert sind, dadurch gekennzeichnet, daß für die Verbindung mit einer hohlen Antriebswelle (19), in der sich ein Schläger (15) zum Ausüben von Schlägen auf das hintere Ende des im Futter eingespannten Einspannschaftes befindet, die Einspannfläche (31, 131, 331) mindestens einer Backe (11, 111, 311) mit mindestens einer sich im wesentlichen axial erstreckenden Mitnehmerfläche (33, 133, 333) versehen ist, die mit mindestens einer Gegenfläche (34, 134, 234, 435, 535) des im Futter locker eingespannten Einspannschaftes zusammenwirkt und das Antriebsdrehmoment von der Antriebswelle (19) auf das Werkzeug überträgt, ohne eine Axialverschiebung des Einspannschaftes innerhalb des Backenhalters zu behindern, und daß der Backenhalter an seinem hinteren Ende einen Durchbruch (14) für die Ausübung der Schläge des Schlägers (15) unmittelbar auf das hintere Ende des im Futter locker eingespannten Einspannschaftes aufweist.

2. Mehrbackenfutter nach Anspruch 1, dadurch gekennzeichnet, daß der Durchbruch (14) im Backenhalter (3, 103, 303) als axiale Führung für das freie Ende des dicksten Einspannschaftes (16, 316) ausgebildet ist.

3. Mehrbackenfutter nach Anspruch 1 oder 2, dadurch gekennzeichnet, daß die Einspannfläche (31, 131, 331) mindestens einer Backe (11, 111, 311) mit mindestens einer Anschlagfläche (38, 138, 338) versehen ist, die mit mindestens einer Anschlagfläche (39, 139, 239, 339, 439, 539) des im Futter locker eingespannten Einspannschaftes (16, 116, 216, 316, 416, 516) einen Anschlag bildet, der zur Begrenzung einer durch die lockere Einspannung möglichen axialen Verschiebbarkeit des Einspannschaftes im Futter nach vorne vorgesehen ist.

4. Mehrbackenfutter nach einem der Ansprüche 1 bis 3, dadurch gekennzeichnet, daß in der Einspannfläche (31, 131, 331) der Backe (11, 111, 311) eine sich im wesentlichen axial erstreckende Nut (32, 132, 332) für eine Rippe (35, 135, 235, 335, 435, 535) am Einspannschaft (16, 116, 216, 316, 416, 516) der Werkzeuge vorhanden ist, so daß beim Umlaufen des Futters die nacheilende Seitenfläche der Nut die Mitnehmerfläche (33, 133, 333) und die nacheilende Seitenfläche der Rippe die Gegenfläche (34, 134, 234, 334, 434, 534) bilden.

5. Mehrbackenfutter nach Anspruch 4, dadurch gekennzeichnet, daß die Nut (132, 332) in Bezug auf alle die Drehachse (5) des Futters enthaltenden Diametralebenen desselben unsymmetrisch angeordnet ist.

6. Mehrbackenfutter nach Anspruch 5, dadurch gekennzeichnet, daß die die Mitnehm erfläche (133, 333) bildende nacheilende Seitenfläche der Nut (132, 332) in einer Diametralebene des Futters angeordnet ist.

7. Mehrbackenfutter nach Anspruch 5 oder 6, dadurch gekennzeichnet, daß die voreilende Seitenfläche der Nut (132, 332) zu einer ihr nacheilenden Radialebene des Futters parallel ist.

8.Mehrbackenfutter nach einem der Ansprüche 4 bis 7, dadurch gekennzeichnet, daß die Nut (32, 132, 332) mindestens an ihrem, dem Werkzeug zugekehrten Ende begrenzt ist, das die Anschlagfläche (38, 138, 338) der Backe (11, 111, 311) bildet, so daß das dem Werkzeug zugekehrte Ende der Rippe (35, 135, 235, 335, 435, 535) die mit der Anschlagfläche der Backe zusammenwirkende Anschlagfläche (39, 139, 239, 339, 439, 539) des Einspannschaftes bildet.

9. Mehrbackenfutter nach einem der Ansprüche 4 bis 8, dadurch gekennzeichnet, daß die Nut sich längs einer Schraubenlinie erstreckt, deren Drehsinn so gerichtet ist, daß das von der Rippe auf den Einspannschaft übertragene Drehmoment eine nach hinten gerichtete axiale Kraftkomponente verursacht,durch die das Werkzeug in das Futter hineingezo- gen wird.

10. Mehrbackenfutter nach einem der Ansprüche 1 bis 9, dadurch gekennzeichnet, daß die Backen (11, 111, 311) für eine gemeinsame axiale Bewegung miteinander verbunden sind.

11. Mehrbackenfutter nach Anspruch 10, dadurch gekennzeichnet, daß zum Verbinden der Backen (11, 111, 311) mit- einander an diesen zinkenartig ineinandergreifende Teile(37,137,33 vorgesehen sind.

12. Mehrbackenfutter nach einem der Ansprüche 1 bis 11, dadurch gekennzeichnet, daß eine mit den Backen (11, 311) zusammenwirkende Hülse (27, 327) vorhanden ist, die auf dem Backenhalter (3, 303) verstellbar gelagert ist.

13. Mehrbackenfutter nach Anspruch 12, dadurch gekennzeichnet, daß die Hülse (27) mit den Backen (11) verbunden ist.

14. Mehrbackenfutter nach Anspruch 12 oder 13, dadurch gekennzeichnet, daß für die verschiedenen Durchmesser der im Futter einspannbaren Einspannschäfte (316, 416, 516) Rasten (342, 343) für die Hülse (327) vorgesehen sind.

15. Mehrbackenfutter nach einem der Ansprüche 1 bis 14, dadurch gekennzeichnet, daß mindestens eine auf die Backen (11, 111, 311) einwirkende Feder (28, 128, 328) vorhanden ist.

16. Mehrbackenfutter nach Anspruch 12 oder 13, dadurch gekennzeichnet, daß eine an der Hülse (27) angreifende Feder (28) vorhanden ist, durch deren Kraft die Backen (11) in der Einspannrichtung vorgespannt sind.

17. Werkzeug mit einem Einspannschaft (116,216,316,416, 516), der mit einer sich axial erstreckenden geraden oder schraubenförmigen Rippe (135,235,335, 435, 535) versehen ist und zum Einspannen in ein Mehrbackenfutter vorgesehen ist, bei dem mindestens eine Backe (11, 111, 311) mit einer axialen, sich gerade bzw. schraubenförmig erstreckenden Nut (32, 132, 332) versehen ist, dadurch gekennzeichnt, daß die Rippe (135,235,335, 435, 535) in Bezug auf alle Diametralebenen des Einspannschaftes unsymmetrisch angeordnet ist.

18. Werkzeug nach Anspruch 17, dadurch gekennzeichnet, daß die beim Umlaufen des Werkzeuges nacheilende Seitenfläche (334, 434, 534) der Rippe (335, 435, 535) in einer Diametralebene des Einspannschaftes (316, 416, 516) angeordnet ist.

19. Werkzeug nach Anspruch 18, dadurch gekennzeichnet, daß die beim Umlaufen des Werkzeuges voreilende Seitenfläche der Rippe (335, 435, 535) mit der nacheilenden Seitenfläche (334, 434, 534) einen spitzen, von Null verschiedenen Winkel bildet.

20. Werkzeug nach Anspruch 19, dadurch gekennzeichnet, daß die voreilende Seitenfläche der Rippe (335,435,535) die Umfangsfläche des Einspannschaftes (316,416,516) tangiert.

21. Werkzeug nach einem der Ansprüche 17 bis 20, dadurch gekennzeichnet, daß die beim Umlaufen des Werkzeuges voreilende Seitenfläche der Rippe (135, 235, 435, 535) mit mindestens einem seitlichen Vorsprung versehen ist.

22. Werkzeug nach Anspruch 21, dadurch gekennzeichnet, daß die Rippe (135, 435) zur Bildung des Vorsprunges vorzugsweise in ihrer Mitte mit einer seitlichen Einbuchtung (141, 441) versehen ist.

23. Werkzeug nach Anspruch 21 oder 22, dadurch gekennzeichnet, daß die Rippe (235, 535) zur Bildung des Vorsprunges mit einer Abflachung (241, 541) versehen ist.

24. Werkzeug nach Anspruch 23, dadurch gekennzeichnet, daß die Abflachung (241, 541) an dem hinteren, dem Werkzeug abgekehrten Ende der Rippe (235, 535) angeordnet ist.

25. Werkzeug nach einem der Ansprüche 17 bis 25, dadurch gekennzeichnet, daß die dem Werkzeug abgekehrte, hintere Endfläche der Rippe (35, 135, 235, 335, 435, 535) mit der Achse des Einspannschaftes (16, 116, 216, 316, 416, 516) einen spitzen Winkel, vorzugsweise von 45°, bildet.

26. Werkzeug nach Anspruch 25, dadurch gekennzeichnet, daß die dem Werkzeug zugekehrte, vordere Endfläche der Rippe (35, 135, 235, 335, 435, 535) mit der Achse des Einspannschaftes einen im wesentlichen rechten Winkel bildet.

27. Werkzeug nach einem der Ansprüche 17 bis 26, dadurch gekennzeichnet, daß sein Werkzeugschaft und sein Einspannschaft (16, 116, 216, 316, 416, 516) eine durchgehende, zylindrische Oberfläche haben.

28. Bohrersatz, bestehend aus mindestens zwei Bohrern für Bohrungen mit verschiedenen Durchmessern, für einen Bohrhammer mit einem Mehrbackenfutter nach einem der Ansprüche 1 bis 16., dadurch gekennzeichnet, daß die Einspannschäfte (16, 116, 216, 316, 416, 516) aller Bohrer des Satzes mit den jeweiligen Werkzeugschäften eine durchgehende, zylindrische Außenfläche bilden und daß die Einspannschäfte mit mindestens einer, die zylindrische Außenfläche unterbrechenden Fläche (34, 134, 234, 334, 434, 534) versehen sind.

29. Bohrersatz nach Anspruch 28, dadurch gekennzeichnet, daß die den zylindrischen Umfang der Einspannschäfte (16, 116, 216, 316, 416, 516) der einzelnen Bohrer unterbrechenden Flächen durch die beim Umlaufen des Werkzeuges nacheilenden Seitenflächen (34, 134, 234, 334, 434, 534) mindestens je einer axialen, geraden oder schraubenförmigen Rippe (35, 135, 235; 335, 435, 535) gebildet sind und daß die Bohrer (16', 316') mit größeren Durchmessern breite und die Bohrer (116', 216', 416', 516') mit kleineren Durchmessern schmälere Rippen (135, 235; 435, 535) aufweisen.

30. Bohrersatz nach Anspruch 29, dadurch gekennzeichnet, daß mindestens bei den Bohrern (116', 216', 316', 416', 516') für kleine Bohrungsdurchmesser die Rippen (135, 235, 335, 435, 535) in Bezug auf alle Diametralebenen des Einspannschaftes unsymmetrisch angeordnet sind.

31. Bohrersatz nach Anspruch 29 oder 30, dadurch gekennzeichnet, daß bei den Bohrern (116', 216', 416', 516') mit kleineren Durchmessern die voreilenden Seitenflächen der Rippen (135, 235, 435, 535) mit einem Vorsprung versehen sind.

32. Bohrersatz nach einem der Ansprüche 28 bis 31, dadurch gekennzeichnet, daß bei allen Bohrern des Satzes die dem Werkzeug abgekehrte Endfläche der Rippe (35, 135, 235, 335, 435, 535) mit der Achse des Einspannschaftes (16, 116, 216; 316, 416, 516) einen spitzen Winkel, vorzugsweise von 45°, bildet.

33. Bohrersatz nach einem der Ansprüche 28 bis 32, dadurch gekennzeichnet, daß bei den Bohrern mit verschiedenen Durchmessern, die dem Werkzeug zugekehrten vorderen Enden der Rippen (35, 135, 235 oder 335, 435, 535) sich in verschiedenen Abständen von den hinteren Enden der Einspannschäfte (15, 115, 216 bzw. 316, 416, 516) befinden.

34. Verfahren zum spanlosen Formen mindestens eines Teiles eines Werkzeuges aus einem stangen- oder rohrförmigen Rohling, der in einem Gesenk durch Pressen, Schmieden oder Hämmern in die gewünschte Form umgeformt wird, dadurch gekennzeichnet, daß zum Formen eines in Bezug auf alle Diametralebenen unsymmetrischen Werkzeugteiles ein Gesenk für mindestens ein Paar von spiegelbildlich zueinander angeordneten und mit den gleichen Enden aneinanderstoßenden Werkzeugteilen verwendet wird, daß mit diesem Gesenk ein sich über die ganze Länge mindestens eines Paares der Werkzeugteile erstreckender Rohling in die gewünschte Form umgeformt wird und daß dann das so erhaltene Paar von Werkzeugteilen in die einzelnen Werkzeugteile aufgeteilt wird.

35. Verfahren nach Anspruch 1, dadurch gekennzeichnet, daß zum Formen von Einspannschäften von Bohrern ein Gesenk für mindestens ein Bohrerpaar verwendet wird, bei dem jeweils die Formen für die Einspannschäfte eines Bohrerpaares unmittelbar mit den den Werkzeugen abgekehrten Enden der Einspannschäfte aneinanderstoßen.

- . -

Fig.1.

Fig.2.

_Fig.3._

_Fig.4._

*Fig.5.*

*Fig.6.*

*Fig.7.*

*Fig.8.*

*Fig.9.*

*Fig.10.*

_Fig.11._

_Fig.12._

Fig.13.

Fig.17.

_Fig.14_

_Fig.15._

_Fig.16._